# EUROPEAN PATENT SPECIFICATION

(11) **EP 2 268 153 B1**
(45) Date of publication and mention of the grant of the patent: **29.02.2012**
(21) Application number: 09723938.8
(22) Date of filing: 27.03.2009
(51) Int. Cl.: A23G 1/32, A23L 2/38, A23L 2/385, A23L 2/39

(54) **COCOA COMPOSITION**
KAKAOZUSAMMENSETZUNG
COMPOSITION DE CACAO

(30) Priority: 28.03.2008 WO PCT/EP2008/053740
(43) Date of publication of application: 05.01.2011
(73) Proprietor: Barry Callebaut AG, 8005 Zurich (CH)
(72) Inventor: BLONDEEL, Ieme, B-9280 Lebbeke-Wieze (BE); DE CLERCQ, Dirk, B-9280 Lebbeke-Wieze (BE); BERNAERT, Herwig, B-9280 Lebbeke-Wieze (BE)
(74) Representative: Michalík, Andrej
(86) International application number: PCT/EP2009/053689
(87) International publication number: WO 2009/118418

(56) References cited:
- WO-A-2005/115160
- WO-A-2007/002851
- WO-A-2007/106473
- WO-A-2008/059064

## Description

### TECHNICAL FIELD

The present specification describes a cocoa-derived material comprising a soluble cocoa powder and a cocoa extract having an elevated amount of cocoa polyphenols. The specification describes to relates to the use of such cocoa-derived material for preparing a beverage or drink containing cocoa, preferably a carbonated beverage or drink. The present specification further discloses methods for preparing a cocoa-derived material and beverage as defined herein.

### BACKGROUND

Cocoa powder is known in the art as the product prepared from cacao nibs, which have been dried and ground after the extraction of cocoa butter. A starting material in the preparation of cocoa powder is cocoa beans which are fermented, dried, roasted and cracked. The nibs - the center of the cocoa bean - are ground into a dark brown paste known as cocoa liquor. This paste is pressed into cocoa cakes by removing most of the cocoa butter. The hard cocoa cakes are ground into cocoa powder. Depending on the amount of cocoa butter earlier removed, the fat content of cocoa powder can be adjusted.

Chocolate flavoured food products such as baked products, beverages, and confectionary use cocoa powder in their preparation process. One major use, for example, is in beverages including drinking chocolate, chocolate-flavored milk, and instant drinks from vending machines and other sources. In these applications, ideally the powder should instantly disperse when mixed with a cold aqueous medium such as milk or water. However, cocoa powder is not easily wetted which can impede dispersion and result in lumping. Thus, when cocoa powder is dispersed in milk or water to prepare a beverage, the physical properties of obtained beverages are often below consumers' appreciation. The difficulty is exacerbated if the powder contains fat, such as residual cocoa butter, or if the dispersion is to take place in a cold liquid.

Another problem is that currently available cocoa powders, when dissolved in liquids such as water or milk, do not provide beverages having satisfying organoleptic properties, especially color, taste, nutritional values. Another problem is that large amounts of cocoa powder need to be used in order to obtain tasty drinks.

The present invention intends to provide a solution to at least some of the above mentioned problems, and aims to provide cocoa-derived materials and cocoa-derived beverages which have satisfying organoleptic properties and nutritive value and are relatively easy to prepared.

WO 2007/106473 discloses a cocoa-based beverage which is prepared from cocoa water. The methods disclosed therein include the addition of water to a cocoa powder.

### SUMMARY

The present invention relates to cocoa-derived materials and beverages and methods for preparation thereof. The present invention provides a cocoa-derived material and a beverage comprising a cocoa powder, preferably a highly soluble cocoa powder, in combination with a cocoa extract, wherein said extract comprises a relatively high level of cocoa polyphenols. The present invention provides cocoa-derived materials and beverages with improved chocolate flavour and enriched polyphenol content.

The applicant has shown that combination of a soluble cocoa powder with a cocoa extract provides a stable composition which can be used for preparing beverages or drinks having organoleptic properties, and in particular taste and color properties, which are significantly improved compared to beverages containing only a soluble cocoa powder or only a cocoa extract. In addition, the applicant has shown that the addition of a polyphenol-rich cocoa extract in a beverage of the present invention improves the flavour of the beverage and provides the beverage with an increased amount of antioxidants leading to an improved and healthier beverage. Beverages prepared using a cocoa-derived material as defined herein provide improved health properties. Furthermore the addition of a polyphenol extract does not interfere with the solubility of the cocoa powder, resulting in a beverage having optimal physical properties. In accordance with the present invention, by mixing ingredients in specific relative amounts a product is obtained having a significant amount of the cocoa polyphenol concentration conserved in the finished product.

The present invention provides subject matter as set forth in any one and all of (i) to (xviii) below:
(i) A cocoa-derived material comprising a soluble cocoa powder and a cocoa extract, whereby said cocoa extract comprises polyphenols in an amount of more than 25% by weight based on the extract, and whereby said soluble cocoa powder has a solubility in an aqueous solvent at a temperature of 20°C of at least 70%,
   wherein the weight ratio of soluble cocoa powder to cocoa extract in said material is comprised between 3:1 and 1:3, and
   wherein said cocoa-derived material is a syrup or is a powder, and
   wherein said material, when provided as a syrup has an ORAC value of between 50 and 250 µmol TE/g syrup, and when provided as powder has an ORAC value of between 10 and 10000 µmol TE/g powder.
(ii) Cocoa-derived material as set forth in (i) above, whereby said soluble cocoa powder has a solubility in an aqueous solvent at a temperature of 20°C of at least 90%.
(iii) Cocoa-derived material as set forth in (i) or (ii) above, wherein the weight ratio of soluble cocoa powder to cocoa extract in said material is comprised between 2:1 and 1:2, and preferably is 1.
(iv) Cocoa-derived material according as set forth in any one of (i) to (iii) above, further comprising one or more additional ingredients selected from the group comprising sugars, sweeteners, caffeine, vitamins, flavouring agents and colouring agents.
(v) Cocoa-derived material as set forth in any one of (i) to (iv) above, wherein said cocoa extract is a solvent-derived extract and whereby said solvent is ethanol and water, acetone and water, 2-butanol and water or 2-propanol and water.
(vi) Cocoa-derived material as set forth in any one of (i) to (v) above, wherein said cocoa extract is obtained from non-defatted cocoa beans, preferably from non-fermented, non-defatted cocoa beans.
(vii) Cocoa-derived material as set forth in any one of (i) to (vi) above, wherein said cocoa extract comprises more than 35wt% of polyphenols.
(viii) Cocoa-derived material as set forth in any one of (i) to (vii) above, wherein said cocoa extract comprises between 5 and 15 % by weight of the extract of polyphenol monomers whereby said monomers comprise between 5 and 15% by weight of the extract of epicatechin and between 0.5 and 5 % by weight of the extract of catechin.
(ix) Cocoa-derived material as set forth in any one of (i) to (viii) above, wherein said soluble cocoa powder comprises between 1 and 24wt% by fat-free dry weight of polyphenols.
(x) Cocoa-derived material as set forth in any one of (i) to (ix) above, wherein said soluble cocoa powder comprises an amount of glucose, glucose oligomers and/or dextrines comprised between 10 and 60% by fat-free dry weight.
(xi) Use of a cocoa-derived material is as set forth in any one of (i) to (x) above for the preparation of a beverage.
(xii) Use as set forth in (xi) above wherein said beverage is a carbonated drink which comprises a suitable amount of carbonated water and/or carbon gas.
(xiii) Cocoa-derived beverage comprising
   - between 10 and 30% by weight of a cocoa-derived material, wherein said cocoa-derived material is as set forth in any one of (i) to (x) above, and
   - between 70 and 90 % by weight of a liquid, preferably water, most preferably carbonated water.
(xiv) Cocoa-derived beverage as set forth in (xiii) above having an ORAC value of at least 1000 µmol TE/100 ml, preferably of at least 2000 µmol TE/100 ml, and most preferably having an ORAC value of between 2500 and 3500 µmol TE/100 ml.
(xv) Beverage as set forth in (xiii) or (xiv) above, having a pH of less than 5, preferably less than 4, and most preferably having a pH of between 3.0 and 3.5.
(xvi) Beverage as set forth in any one of (xiii) to (xv) above, having an amount of polyphenols of at least 0.05 % by weight.
(xvii) Beverage as set forth in any one of (xiii) to (xvi) above, comprising a suitable amount of carbonated water and/or carbon gas.
(xviii) Method for preparing a cocoa-derived beverage as set forth in any one of (xiii) to (xvii) above comprising the steps of
   a) providing a cocoa-derived material as set forth in any one of (i) to (x) above,
   b) admixing water to said cocoa-derived material under aseptic conditions, while optionally also adding other ingredients such as sugar and/or CO₂, and
   c) optionally filling the mixture of step b) in suitable recipients.

The present specification describes a cocoa-derived material comprising a soluble cocoa powder and a cocoa extract, whereby said extract comprises more than 25% by weight based on the extract of polyphenols.

The present specification describes a cocoa-derived material comprising a soluble cocoa powder and a cocoa extract, whereby said cocoa extract comprises polyphenols in an amount of more than 25% by weight based on the extract, and whereby said soluble cocoa powder has a solubility in an aqueous solvent at a temperature of 20°C of at least 70%. Preferably said cocoa-derived material comprises a soluble cocoa powder having a solubility in an aqueous solvent at a temperature of 20°C of at least 90%.

According to the present specification, said cocoa-derived material may be a liquid material, preferably a syrup, or said cocoa-derived material may be in a dried form consisting of a powder composition.

The present specification describes a cocoa-derived material, wherein said cocoa extract comprises between 25 and 75% by weight of polyphenols, whereby said polyphenols comprise between 5 and 15 % by weight of the cocoa extract of monomers and more than 20 % by weight of the cocoa extract of one or more oligomers. Said monomers may comprise between 5 and 15% by weight of the extract of epicatechin and between 0.5 and 5 % by weight of the extract of catechin. Said oligomers may comprise (% by weight of the extract) between 5 and 15% by weight of dimers, between 5 and 15% by weight of trimers, between 2.5 and 10% by weight of tetramers, between 2.5 and 10% by weight of pentamers, between 2.5 and 10 % by weight of hexamers, between 0.5 and 5% by weight of heptamers, between 0.5 and 5% by weight of octamers, between 0.5 and 5% by weight of nonamers, and/or between 0.1 and 3% by weight of decamers. Preferably said extract contains less than 10 and preferably less than 5 % by weight of xanthines. Said extract may also contain less than 10 and preferably less than 5 % by weight of theobromine.

The present specification further describes a cocoa-derived material, wherein said soluble cocoa powder comprises an amount of theobromine which is lower than 5% by fat-free dry weight of the powder. According to the specification, the soluble cocoa powder may comprise an amount of caffeine which is lower than 1% by fat-free dry weight of the powder. According to the specification, the soluble cocoa powder may comprise an amount of polyphenols comprised between 1 and 24 % by fat-free dry weight of the powder.

The specification describes said soluble cocoa powder may comprise an amount of glucose, glucose oligomers and/or dextrines comprised between 10 and 60% by fat-free dry weight of the powder.

The present specification further describes to a method for preparing a cocoa-derived material. The method involves a method for preparing a cocoa-derived material in syrup form. The method may involve a method for preparing a cocoa-derived material in dried form.

The present specification further describes a carbonated cocoa-derived beverage or drink comprising between 0.01 and 30% by weight of a cocoa-derived material, and for instance between 5 and 30% by weight or between 10 and 30% by weight of a cocoa-derived material, and between 70 and 99.99 % by weight of a liquid, and for instance between 70 and 99.5 % by weight or between 70 and 90 % by weight of a liquid, preferably water, most preferably carbonated water, wherein said cocoa-derived material comprises a soluble cocoa powder and a cocoa extract, whereby said cocoa extract comprises more than 25% by weight based on the extract of polyphenols. Preferably said cocoa-derived beverage is as defined in the present specification.

According to the present specification, a beverage may comprise between 0.01 and 30% by weight of a cocoa-derived material, and between 70 and 99.99 % by weight of a liquid, preferably water, most preferably carbonated water, wherein said cocoa-derived material comprises a soluble cocoa powder and a cocoa extract, whereby said soluble cocoa powder has a solubility in an aqueous solvent at a temperature of 20°C of at least 70%, preferably of at least 90%; and whereby said cocoa extract comprises more than 25% by weight based on the extract of polyphenols.

A beverage according to the specification may comprise a suitable amount of carbonated water and/or carbon gas.

The present specification further describes a method for preparing a beverage or drink comprising a cocoa-derived material as defined herein.

The present specification further describes the use of a cocoa-derived material as defined herein for the preparation of a beverage. Said beverage may be a carbonated drink which comprises a suitable amount of carbonated water and/or carbon gas.

By combining a cocoa extract and a soluble cocoa product in accordance with the present invention, a cocoa-derived composition can be obtained which is particularly suitable for preparing beverages, as the combination of both of these components permits to improve quality, nutritional and organoleptic properties, such as for instance, enhanced taste and/or flavor stability, enhanced digestibility, improved nutritional value of prepared beverages. Beverages according to the invention are significantly preferred when tested by taste panels.

In addition, it has been shown that a combination of a cocoa extract and a soluble cocoa product in a cocoa-derived composition according to the invention significantly prevents sedimentation of the beverage. Beverages comprising a cocoa-derived material according to the invention remain substantially crystal clear and free from sedimentation when stored under refrigerated or ambient temperatures for several weeks up to several months. This is unexpected, especially because beverages comprising a cocoa powder are known in the art to suffer from sedimentation problems.

In accordance therewith, by combining a cocoa extract and a soluble cocoa powder as defined herein in a cocoa-derived material, a material is obtained that has a considerable shelf-life; and that can be stored for a relatively long time without showing substantial sedimentation.

Further, a cocoa-derived material as disclosed herein and beverages prepared therewith provide health benefits, e.g. since they have a great antioxidant power. The present invention provides antioxidant-rich food products that have potential to protect against oxidation, or cellular damage caused by free radicals. Moreover, a cocoa-derived material or beverage as disclosed herein has improved amounts of flavonols. The invention thus provides flavonol-rich food products that have health potential, e.g. for hart health or for mood improvement.

Also, carbonated beverages according to the invention have the benefit of showing improved shelf life and taste. Moreover, carbonated drinks according to the invention have the benefit of showing improved stability, e.g. as they are less susceptible to microbial contamination.

With the insight to better show the characteristics of the invention, some preferred embodiments and examples are described hereafter referring to the enclosed drawing.

### FIGURE LEGEND

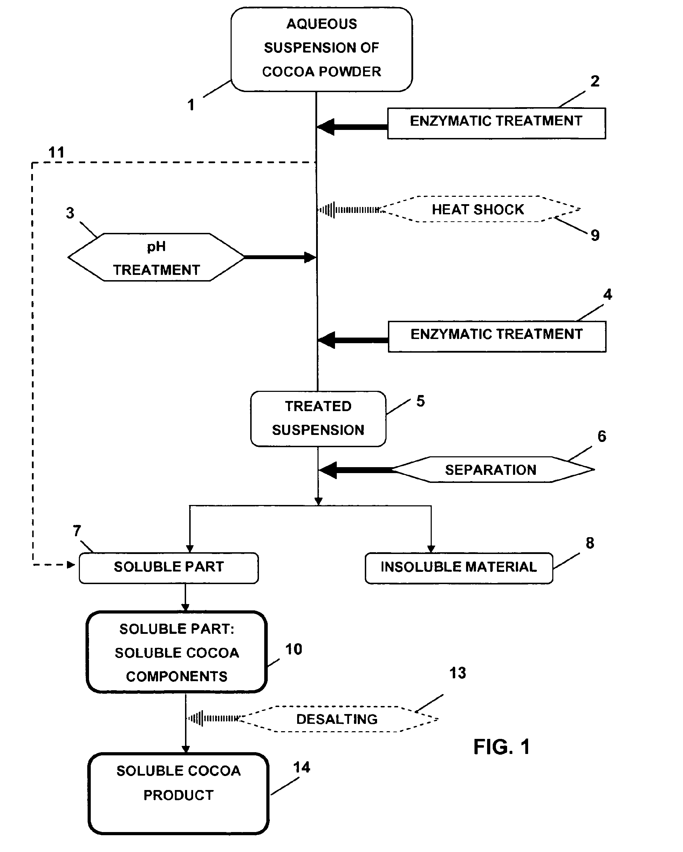

**FIG. 1** is a flow chart showing steps of a method for preparing a soluble cocoa product applied in a cocoa-derived material and beverage according to the invention.

### DETAILED DESCRIPTION OF THE INVENTION

Unless defined otherwise, all technical and scientific terms used herein have the same meaning as is commonly understood by one of skill in the art.

The articles "a" and "an" are used herein to refer to one or to more than one, i.e. to at least one of the grammatical object of the article. By way of example, "a sample" means one sample or more than one sample.

Throughout this application, the term "about" is used to indicate that a value includes the standard deviation of error for the device or method being employed to determine the value.

The recitation of numerical ranges by endpoints includes all integer numbers and, where appropriate, fractions subsumed within that range (*e.g*. 1 to 5 can include 1, 2, 3, 4 when referring to, for example, a number of samples, and can also include 1.5, 2, 2.75 and 3.80, when referring to, for example, temperatures). The recitation of end points also includes the end point values themselves (*e.g*. from 1.0 to 5.0 includes both 1.0 and 5.0).

Where a percentage is recited in respect of a quantity, it refers to a weight ratio (w/w), unless otherwise indicated.

The term *"cocoa-derived'* material or beverage as used herein is intended to refer to a material or beverage which contains components that are obtained from cocoa beans. It is noted that the terms "cocoa" and "cacao" as used herein are considered as synonyms.

### 1. Cocoa-derived material

The present specification discloses a cocoa-derived material. The cocoa-derived material may be in a liquid form, such as in the form of a solution or syrup, or a solid form, for instance in a freeze-dried powder form.

The terms *"cocoa-derived material"* or "cocoa-derived composition" are used herein as synonyms and are intended to refer to a material or composition in concentrated form which is preferably to be further diluted, e.g. in a liquid, or alternatively used as such.

The cocoa-derived material according to the present specification comprises a soluble cocoa powder and a cocoa extract, whereby said extract comprises more than 25% by weight based on the extract of polyphenols. Polyphenols are bioactive substances derived from plant materials and are closely associated with the sensory and nutritional quality of products derived from these plant materials. The term "cocoa *polyphenol*" as used herein is intended to include polyphenolic products, including proanthocyanidins, and more particularly procyanidins, extracted from cocoa beans and derivatives thereof.

According to the specification, the weight ratio of soluble cocoa powder to cocoa extract in a cocoa-derived material is comprised between 3:1 and 1:3 and preferably between 2:1 and 1:2, and preferably is 1.

Said cocoa-derived material, may further comprise one or more additional ingredients selected from the group comprising sugars, sweeteners, caffeine, vitamins, flavouring agents and colouring agents. Other additional ingredients may still be added to a material according to the present specification including but not limited to guarana, taurine, and other compounds available in the art. In this context it is noted that these additional ingredients refer to ingredients that are not derived from or obtained from cocoa beans but that are *added* to the cocoa-derived material according to the present specification

Sugars that can be added to a cocoa-derived material according to the present specification may comprise but are not limited to sucrose, dextrose, maltose, fructose, lactose, brown and invert sugars and other compounds available in the art alone or in combination.

Available nutritive or carbohydrate sweeteners that can be selected and added to a cocoa-derived material according to the present specification include but are not limited to for instance sucralose, aspartame, saccharin, stevioside and other compounds available in the art and preferably comprise sucralose. The beverages, alone or in any combination, include sucrose, dextrose, fructose, liquid fructose, lactose, maltose, glucose, trehalose, oligofructose, inulin, agave syrup, corn syrup, invert sugar, honey, cane syrup, maple sugar, brown sugar, molasses and other compounds available in the art, for example. Furthermore, artificial or non-nutritive sweeteners can be used in the specification, in total or partial replacement of nutritive sweeteners, to produce low calorie or low carbohydrate products or sugar-free products. Examples of sweeteners include, but are not limited to, Acesulfame potassium (Ace-K), sucralose, maltitol, xylitol, erythritol, mannitol, sorbitol, lactitol, isomaltulose, powdered hydrogenated glucose syrup, aspartame, neotame, cyclamate, saccharine, glycyrrhizine, dihydrochalcones, stevisoide, thaumatin, monellin, neohesperidine, any of the polyol compounds, any available natural products of plants, such as glycosides and specifically stevioside and rebaudioside A, other compounds available in the art and any combination of two or more of these sweeteners. A preferred polyol or sugar alcohol is xylitol, but any others can be selected, alone or in any of various combinations possible, from, for example, erythritol, mannitol, sorbitol, and maltitol. Sugar substitutes, as known and available in the art, can also be used, alone or in various combinations.

Vitamins that may be used in a cocoa-derived material according to the present specification may include but are not limited to for instance vitamin C, vitamin D, vitamin E or other compounds available in the art.

Flavouring agents that may be used in a material according to the present specification include but are not limited to for instance flavor agents and beverage flavor agents known or available and for instance vanillin, coumarin, and other compounds available in the art.

Colouring agents that may be used in a material according to the present specification include but are not limited to for instance β-carotene, annatto, preservatives such as e.g. sodium- or calcium propionate, sulphite ammonia caramel, E150d, other compounds available in the art or any combinations thereof.

### SYRUP

According to the present specification, said cocoa-derived material may be in a liquid form; said cocoa-derived material may be a syrup.

According to the present specification, a syrup may comprise up to 25 wt% of a soluble cocoa powder as defined herein and up to 25wt% of a cocoa extract as defined herein. Preferably said syrup may comprise between 0.25 and 5 wt% of a soluble cocoa powder as defined herein and between 0.25 and 5 wt% of a cocoa extract as defined herein. Preferably said syrup comprises between 0.5 and 3 wt%, and more preferably between 0.75 and 1.75 wt% of said soluble cocoa powder, and between 0.5 and 3wt% and more preferably between 0.75 and 1.75 wt% of said cocoa extract.

According to the present specification, said syrup may comprise an amount of polyphenols between 0.05 and 1.5%, and preferably between 0.2 and 0.7% by weight of said syrup.

According to the present specification, the weight ratio of soluble cocoa powder to cocoa extract in a syrup may be comprised between 3:1 and 1:3 and for instance is comprised between 2:1 and 1:2, or is equal to 1.

According to the present specification said syrup may a comprise a liquid which may be a water-based or aqueous solvent such as but not limited to water, milk, an alcohol, in an amount of less than 80% by weight of said syrup preferably in an amount of less than 50% by weight of said syrup. According to the present specification, said syrup may comprise a liquid such as water, preferably carbonated water, in an amount of less than 80% by weight of said syrup preferably in an amount of less than 50% by weight of said syrup, and for instance less than 45, 40, 35, 33, 30, 28, 26, 25, 24, 23, 22, 21, 20, or 18 % by weight of said syrup.

According to the present specification, said syrup, may further comprise one or more additional ingredients selected from the group comprising sugars, sweeteners, caffeine, vitamins, flavouring agents and colouring agents.

According to the present specification, said additional ingredient may be a sugar and/or a sweetener. The specification discloses a cocoa-derived material wherein said additional ingredient is a sugar provided in an amount of less than 80, and for instance less than 70, 60, 50, 40, 35, 30, 25, 20, 15, 10 % by weight of said syrup. Alternatively or in combination therewith the specification discloses a cocoa-derived material wherein said additional ingredient is a sweetener provided in an amount of less than 80, and for instance less than 70, 60, 50, 40, 35, 30, 25, 20, 15, 10, 1, 0.1, 0.01 % by weight of said syrup. The amount of sweetener added to the cocoa-derived material depends largely on the sweetness of the used sweetener. This factor is known by a person skilled in the art.

According to the present specification, said additional ingredient may be caffeine, preferably provided in an amount of between 0.005 and 7% by weight of said syrup, preferably between 0.005 and 0.7 % by weight of said syrup, and more preferably between 0.01 and 0.1 % by weight of said syrup.

According to the present specification, a cocoa-derived material in syrup form may comprise the following characteristics. A syrup according to the present specification has a pH of less than 5, preferably less than 4 most preferably having a pH of between 3.0 and 3.5. pH of the present cocoa-derived material can be adjusted with organic acids. Examples of organic acids include but are not limited to H₂CO₃, H₃PO₄, other compounds available in the art and combinations thereof. The low pH of the syrup provides a microbiologically stable environment that contributes to a longer storing period and extended shelf life.

In addition a syrup according to the present specification has an Oxygen Radical Absorbance Capacity (ORAC) value between 10 and 500 µmol Trolox Equivalents (TE) per gram syrup and preferably between 50 and 250 µmol TE per gram syrup and more preferably between 70 and 150 µmol TE per gram syrup. The ORAC value provides a measurement of the antioxidant capacities of the composition and higher ORAC values are known in the art to have beneficial effects on the health.

Techniques for measuring ORAC values are well known to a person of skill in the present art and will therefore not be disclosed into detail herein.

### POWDER COMPOSITION

The present specification also describes a cocoa-derived material, wherein said material is in a dry or lyophilized form, and preferably in the form of granules, pellets, or a powder. Said cocoa-derived material may be in a dried form and consists of a powder composition. The term "powder composition" or "cocoa powder composition" as used herein refers to a powdery product, e.g. in the form of granules, pellets, or a powder, which contains substances or materials that are obtained from cocoa beans.

According to the specification, said powder composition may comprise between 0.01 and 75 wt% of a soluble cocoa powder as defined herein and between 0.01 and 75 wt% of a cocoa extract as defined herein. Preferably said powder composition comprises between 0.1 and 50 wt% of said soluble cocoa powder, and between 0.5 and 30 wt% and more preferably between 0.75 and 10 wt% of said cocoa extract.

Accordong to the specification, the weight ratio of soluble cocoa powder to cocoa extract in a powder composition according to the specification may be comprised between 3:1 and 1:3 and for instance is comprised between 2:1 and 1:2, or is equal to 1.

Preferably said powder composition has a degree of solubility in a solvent, preferably in a polar solvent, preferably a water-based solvent of at least 50%, and more preferably of at least 70%, and even more preferably of at least 90% and most preferably of between 95 and 100 % or even of between 98 and 100%. More in particular, the present powder composition has a solubility at a temperature of 20°C in a polar solvent, for instance an aqueous solvent such as water, milk, an alcohol, or mixtures thereof of at least 50%, at least 70%, or at least 90%.

According to the present specification, said powder composition, may further comprise one or more additional ingredients selected from the group comprising sugars, sweeteners, caffeine, vitamins, flavouring agents and colouring agents.

According to the present specification, said additional ingredient may be a sugar and/or a sweetener. Preferably the specification discloses a powder composition wherein said additional ingredient is a sugar provided in an amount of less than 80, and for instance less than 70, 60, 50, 40, 35, 30, 25, 20, 15, 10 % by weight of said powder composition. Alternatively or in combination therewith the specification discloses a cocoa-derived material wherein said additional ingredient is a sweetener provided in an amount of less than 80, and for instance less than 70, 60, 50, 40, 35, 30, 25, 20, 15, 10, 1, 0.1, 0.01 % by weight of said powder composition. According to the present specification, said additional ingredient may be caffeine, preferably provided in an amount of between 0.005 and 0.7 % by weight of said powder composition.

In addition a powder composition according to the present specification may have an ORAC value between 10 and 10000 µmol TE per gram powder, and for instance between 15 and 8000, between 30 and 5000, between 50 and 3000, between 100 and 500, or between 150 and 300 µmol TE per gram powder.

According to the present specification, for instance when using a sweetener, a powder composition may have an ORAC value between 10 and 10000 µmol TE per gram powder, and for instance between 100 and 8000, between 500 and 6000, between 1000 and 5000, between 2000 and 4000, or between 2500 and 3500 µmol TE per gram powder.

According to the present specification, a powder composition can be agglomerated using methods known by a skilled person. By agglomerating the powder composition the instant solubility of the powder is improved.

A soluble cocoa powder and cocoa extract applied in a cocoa-derived material according to the present specification will now be characterised in more detail below.

### SOLUBLE COCOA POWDER

A soluble cocoa powder is applied in a cocoa-derived material of the present specification.

The term *"soluble"* in this context refers to a cocoa powder that can be at least partly dissolved in a suitable liquid, e.g. in a polar, water-based or aqueous solvent such as milk, water, an alcohol or a mixture thereof. Preferably the present soluble cocoa powder has a degree of solubility in a solvent, preferably in a polar solvent, preferably a water-based solvent of at least 50%, and more preferably of at least 70%, and even more preferably of at least 90% and most preferably of between 95 and 100 % or even of between 98 and 100%. More in particular, a soluble cocoa powder applied in the present cocoa-derived composition as defined herein has a solubility at a temperature of 20°C in a polar solvent, for instance an aqueous solvent such as water, milk, an alcohol, an alcoholic drink containing water, etc. of at least 50%, of at least 70%, of at least 90%, and for instance of between 95 and 100 % or between 98 and 100%. Preferably, the soluble cocoa powder applied in the present cocoa-derived material has a solubility of at least 50, 60, 65, 70, 75, 80, 85, 90, 95, 96, 97, 98, 99, 99.5 or of 100 %. The present specification discloses a soluble cocoa powder wherein the amount of insoluble material is lower than 50 weight%, and preferably lower than 40, 35, 30, 25, 20, 15, 10, 5, 4, 3, 2, 1, or 0.5 % by weight. Solubility can be measured as defined below.

"*Solubility*" or "*degree of solubility*" refers to the ability for a given substance, i.e. the solute, to dissolve in a fluid at ease, in particular a solvent. Solvents comprise polar solvents, and preferably water-based or aqueous solvents, i.e. solvents containing water, such as, but not limited to water, milk, an alcohol, an alcoholic drink containing water, and mixtures thereof. A "solute" as used herein may in the context of the present specification refer to either a powder composition or a soluble cocoa powder as defined herein.

Solubility is measured in terms of the maximum amount of solute dissolved at a specified temperature, for instance 20°C, in a definite amount of the solvent at equilibrium, without the use of emulsifiers. The term "% solubility" (or % dissolution) as used herein thus refers to the amount in weight % of solute that is dissolved in a solvent as defined above. A value of 50% solubility for instance indicates that 50wt% of the solute is dissolved, while 50wt% will sink or form a sediment. 100% solubility refers to a solute which is wholly soluble in a solvent as defined above so that such solution remains free of sediment.

Solubility is measured using methods known in the art.

For instance, solubility can be measured by agitating or shaking at a temperature of 20°C and a pressure of 1 atm an amount of 10 gram of solute (e.g. a powder composition or a soluble cocoa powder as defined herein) with an amount of 90 g of solvent of choice for at least 2 hours, when avoiding evaporation by using a closed system. Then the solution is filtered over a whatmann filter with a pore size between 5 and 12 micrometres. The filtrate is dried in an oven overnight at 105°C, and the amount of dry matter is determined. Solubility is calculated based on the amount of dry matter remaining after filtration compared to the amount of solute put into practice.

Another technique includes centrifugation of an amount of 10 gram of solute ((e.g. a powder composition or a soluble cocoa powder as defined herein) with an amount of 90 g of solvent as defined herein with a centrifuge at 10000RPM for 5 minutes. After centrifugation, the upper 'soluble' layer is used to measure the dry matter content according to the procedure as described above.

According to the specification a soluble cocoa powder as used herein has one or more of the following characteristics.

According to the specification, a soluble cocoa powder as used herein may have an amount of polyphenols (wt% is expressed as % by fat-free dry weight) comprised between 1 and 24wt% and for instance between 5 and 13wt%, or for instance comprised between 7 and 13wt%.

According to the specification, a soluble cocoa powder as used herein may have a theobromine content lower than 5 % by fat-free dry weight. For instance said soluble cocoa powder has a theobromine content comprised between 2.5 and 5% by fat-free dry weight, and for instance a theobromine content of 2.5, 3.0, 3.5, 4.0, 4.5, 5.0 % by fat-free dry weight.

According to the specification, a soluble cocoa powder as used herein may have a caffeine content lower than 1% by fat-free dry weight. For instance said soluble cocoa powder has a caffeine content comprised between 0.25 and 0.7% by fat-free dry weight, and for instance a caffeine content of 0.25, 0.30, 0.35, 0.40, 0.45, 0.50, 0.55, 0.60, 0.65, or 0.70t% by fat-free dry weight.

According to the specification, a soluble cocoa powder as used herein may have an amount of glucose, glucose oligomers and/or dextrines (wt% is expressed as % by fat-free dry weight) comprised between 10 and 60wt%, and for instance between 15 and 50wt%, and for instance between 15 and 40wt% and for instance of at least 10, 15, 20, 25, 30, 35, 40, or 45 wt%.

According to the present specification, a soluble cocoa powder as used herein may have an amount of fat lower than 25wt%, and for instance lower than 24wt%, or between 0 and 20wt% and for instance between 0 and 12wt%, and for instance lower than 10, 8, 5 or 3 wt%.

According to the present specification, a soluble cocoa powder as used herein may have an amount of amino acids, peptides, and proteins (wt% is expressed as % by fat-free dry weight) of between 10 and 40 wt%, and for instance between 12 and 30wt%, or for instance of 15, 20, 25, or 28 wt%.

According to the present specification, a soluble cocoa powder as used herein may have an amount of ash (wt% is expressed as % by fat-free dry weight) comprised between 1 and 10wt% and preferably lower than 8wt%.

According to the present specification, a soluble cocoa powder as used herein may have an amount of pentosanes (wt% is expressed as % by fat-free dry weight) comprised between 3 and 10wt% and for instance comprised between 3.5 and 5wt%.

According to the present specification, a soluble cocoa powder as used herein may have an amount of pectines (wt% is expressed as % by fat-free dry weight) comprised between 0.1 and 3wt% and for instance comprised between 0.5 and 2wt%.

According to the present specification, a soluble cocoa powder as used herein may have an amount of organic acids (wt% is expressed as % by fat-free dry weight) comprised between 1 and 5wt% and for instance between 2 and 4wt%.

According to the present specification, a soluble cocoa powder as used herein may have an amount of fosfatides (wt% is expressed as % by fat-free dry weight) which is lower than 1wt%.

According to the present specification, said soluble cocoa powder may be in a dry or lyophilized form and for instance is in the form of granules, pellets, or a powder.

According to the present specification, a soluble cocoa powder as used herein may be a soluble cocoa product in a dry or lyophilized form, and preferably in the form of granules, pellets, or a powder having a solubility at a temperature of 20°C in an aqueous solvent, e.g. water of at least 90% and preferably of between 95 and 100 %, and having:
- an amount of theobromine which is lower than 5% by fat-free dry weight, and for instance between 2.5 and 5% by fat-free dry weight, and
- an amount of caffeine which is lower than 1% by fat-free dry weight, and
- an amount of polyphenols which is comprised between 1 and 24wt% by fat-free dry weight, and for instance between 7and 13% by fat-free dry weight, and
- an amount of glucose, glucose oligomers and/or dextrines comprised between 10 and 60% by fat-free dry weight, and for instance between 15 and 40wt%.

According to the specification, a soluble cocoa powder applied in the present cocoa-derived material may be the soluble cocoa product as disclosed in WO 2008/059064 (PCT/EP2007/062486).

The amount of moisture in said soluble cocoa powder can be adjusted according to techniques well known to the skilled person. In this context, it should be noted that the present soluble cocoa powder applied in the present cocoa-derived material differs from defatted cocoa powder, known in the art, in that it does not form a sediment when dissolved in a suitable solvent, e.g. water or milk. The present invention thus provides a cocoa-derived material comprising an (at least partially) defatted soluble cocoa product which has not the prior art drawback of sedimentation of known defatted cocoa powders.

A soluble cocoa powder applied in the present cocoa-derived material, either syrup or powder composition, is preferably prepared by a method as schematically illustrated in **FIG. 1**. Such method may comprise the steps of
a) preparing an aqueous suspension of cocoa powder 1,
b) optionally treating said suspension with one or more degrading enzymes 2,
c) submitting **3** the suspension obtained in step a) or step b) to a pH treatment comprising treating said suspension for at least 2 hours at a suitable pH -for instance at a pH of at least 7, and preferably at least 10, or at a pH lower than 3- a temperature of at least 100°C, and a pressure which is at least 1 bar higher than the ambient pressure,
d) optionally bringing the pH of the suspension obtained in step c) to a pH value corresponding with the pH of the suspension obtained in step a),
e) treating **4** the suspension obtained in step c) or d) with one or more degrading enzymes, and
f) separating **6** the suspension **5** obtained in step e) into insoluble material **8** and a soluble part **7.**

The soluble cocoa components **10** are then obtained from the soluble part 7. This method may further comprise the step of desalting **13** the soluble part containing the soluble cocoa components **10,** e.g. by means of ion exchange, to remove salts.

According to the present specification, a method for the preparation of a soluble cocoa powder applied in the present cocoa-derived material may be a method for the preparation of a soluble cocoa powder as disclosed in WO 2008/059064 (PCT/EP2007/062486). The cocoa powder **1,** also denoted as cocoa start powder, used as starting material in the methods for preparing a soluble cocoa powder is ordinary cocoa powder known to the person skilled in the art. The degrading enzymes used during enzymatic treatment **2, 4** are those which are capable of degrading insoluble molecules present in cocoa. These degrading enzymes are well known in the art of extraction of cocoa powder.

The method encompasses the separate and sequential treatment with different classes of enzymes. More in particular, the present method comprises a first enzymatic treatment **2** which is carried out on the above-described aqueous suspension of cocoa powder obtained in step a). The degrading enzymes used during such first enzymatic treatment **2** are those which are capable of degrading starch present in cocoa, such as amylase, alpha-amylase and others. These degrading enzymes are well known in the art of extraction of cocoa powder. The present method further comprises a second enzymatic treatment **4** which is carried out on the above-described suspension of cocoa powder that has been subjected to a first enzymatic treatment **2** and a pH treatment and that is obtained in step c) or d) of the present method. Factors such as temperature, agitation, concentration and time of the enzymatic treatment **2,4** can be optimised according to the knowledge of the skilled person. The suspension is generally agitated continuously during enzymatic treatment **2,4.** This is achieved, using, for example, a stirrer, jets, agitated vessel or any means known in the art.

### COCOA EXTRACT

The extract applied in the cocoa-derived material can comprise a non-purified as well as a purified and/or concentrated extract.

Said cocoa extract preferably is a solvent-derived extract. The term "*solvent*-*derived'* as used herein refers to an extract of cocoa that is obtained using as solvent a mixture of water and an organic solvent, e.g. a water miscible organic solvent, an alcohol, ethanol, acetone, 2-butanol, or 2-propanol, in the extraction procedure. Preferably said solvent is ethanol and water, acetone and water, 2-butanol and water or 2-propanol and water.

According to the present specification, said cocoa extract may have an elevated level of polyphenols, and preferably comprises more than 25 % by weight based on the extract of polyphenols. According to the present specification, said cocoa extract may have between 25 and 75%, more preferably between 25 and 65 % by weight of polyphenols, and for example more than 25, 30, 35, 40, 45, 50, 55, 60 or 65 % by weight of polyphenols.

According to the present specification, a cocoa extract as used herein may comprise between 25 and 75%, more preferably between 25 and 65 % by weight of polyphenols, or for instance between 35 and 65% or between 40 and 55% of polyphenols. These can be analysed by Folin Ciocalteu method and expressed as epicatechin.

Said polyphenols comprise between 5 and 15 % or between 5 and 10% by weight of the extract of polyphenol monomers and more than 10 %, or for instance more than 20% or more than 30% by weight of the extract of one or more polyphenol oligomers.

According to the present specification, a cocoa extract as used herein may comprise monomers, whereby said monomers comprise between 5 and 15%, by weight of the extract of epicatechin and between 0.5 and 5 % by weight of the extract of catechin. According to the present specification, the monomers present in the cocoa extract may comprise between 6 and 10%by weight of the extract of epicatechin, and between 1 and 4 % by weight of the extract of catechin.

The term "*oligomers*" is used herein to refer to compounds having more than one monomer unit. According to the present specification, a cocoa extract as used herein may comprise oligomers wherein said oligomers comprise dimer(s), trimer(s), tetramer(s), pentamer(s), hexamer(s), heptamer(s), octamer(s), nonamer(s) and/or decamer(s). According to the present specification, said oligomers may further comprise oligomers having more than ten monomer units and may comprise undecamer(s), dodecamer(s), tridecamer(s), tetradecamer(s), pentadecamer(s), hexadecamer(s), heptadecamer(s), octadecamer(s), nonadecamer(s), eicosmer(s), etc..

According to the present specification, a cocoa extract as used herein may comprise (% by weight of the extract): between 5 and 15% by weight, and preferably between 6 and 10% by weight of dimer(s), between 5 and 15% by weight, and preferably between 6 and 10% by weight of trimer(s), between 2.5 and 10% by weight, and preferably between 4 and 9% by weight of tetramer(s), between 2.5 and 10% by weight, and preferably between 4 and 9% by weight of pentamer(s), between 2.5 and 10% by weight, and preferably between 4 and 9% by weight of hexamer(s), between 0.5 and 5% by weight, and preferably between 1 and 3% by weight of heptamer(s), between 0.5 and 5% by weight, and preferably between 0.5 and 3% by weight of octamer(s), between 0.5 and 5% by weight, and preferably between 1 and 3% by weight of nonamer(s), and/or between 0.1 and 3% by weight, and preferably between 0.1 and 1% by weight of decamer(s). According to the present specification, a cocoa extract as used herein may comprise more than 3% by weight of the extract, and preferably more than 5% by weight of the extract, and even more preferred more than 8 % by weight of the extract of one or more oligomers having more than 10 monomer units, and including but not limited to undecamer(s), dodecamer(s), tridecamer(s), tetradecamer(s), pentadecamer(s), hexadecamer(s), heptadecamer(s), octadecamer(s), nonadecamer(s), eicosmer(s), etc...

A cocoa extract as used herein may comprise additional components such as but not limited to ash(es), one or more alkaloid(s), one of more fat(s), one or more sugar(s) and/or sugar alcohol(s), one or more protein(s), one or more fiber(s) and moisture, e.g. water, and any combinations thereof.

According to the present specification, a cocoa extract as used herein may comprise between 5 and 15% or between 8 and 12% by weight of one or more alkaloid(s). Preferably said alkaloids comprise but are not limited to xanthines and/or theobromines. According to the present specification, a cocoa extract as used herein may comprise less than 10%, or less than 5% by weight of xanthines. According to the present specification, a cocoa extract as used herein may comprise less than 10%, or less than 5% by weight of theobromine.

According to the present specification, a cocoa extract as used herein may comprise between 5 and 15 % by weight or between 8 and 12% by weight of one or more sugar(s) and/or sugar alcohol(s). Preferably said sugars may comprise but are not limited to fructose and/or glucose. Said sugar alcohol may comprise but is not limited to mannitol.

According to the present specification, a cocoa extract as used herein may comprise between 8 and 25 % or between 15 and 25 % or between 17 and 21% by weight of one or more protein(s). The term proteins may include but is not limited to peptides, oligopeptides, polypeptides, amides, polyamides, enzymes, etc...

According to the present specification, a cocoa extract as used herein may comprise between 3 and 10 %, or between 3 and 8% by weight of one or more fiber(s). Preferably said fibers may comprise but are not limited to pectin, cellulose, hemi-cellulose and/or lignin.

According to the present specification, a cocoa extract as used herein may comprise between 0.5 and 5 %, or between 1 and 3% by weight of one or more fats. Preferably said fat consists of cocoa fat.

The present cocoa extract may be in any type of formulation, for instance in a liquid or in a dry or lyophilized form. In an example, the present cocoa extract may be in the form of a powder, an uncompressed powder, a semi-compressed powder, a granule, a pellet, a tablet, a granulate, a small particle, a capsule, etc.. It shall be clear that a skilled person will understand what is meant with these types of formulations.

According to the present specification, a cocoa extract applied in the present cocoa-derived material may be a cocoa extract as disclosed in WO 2007/082703.

A cocoa extract applied in the present cocoa-derived material as defined above can be obtained by methods known in the art such as for instance the ones disclosed in WO 02/14251, which is incorporated herein by reference.

Cocoa extracts obtained by the methods as indicated in WO 02/14251 may be further extracted with CO₂ and a suitable co-solvent, e.g. ethanol, as for instance described in WO 2007/082703.

More in particular, a cocoa extract applied in the present cocoa-derived material is preferably obtained or obtainable by extraction of non-defatted cocoa beans, preferably of non-fermented and non-defatted cocoa beans.

In an example, a cocoa extract as used in the present specification may be prepared by using fresh beans, pre-treated or not pre-treated, having the pulp and the shell removed by a pulp removal and shelling operation. Clean kernels can thus be obtained which are then ground, for example in a cutting mill, in the presence of a solvent, such as for instance water, ethanol, acetone, 2-butanol, 2-propanol, in all proportions, mixed with water. Preferably, the solvent content is greater than 50% by volume (taking into account the water contributed by the beans). The ground kemel/solvent mixture can be left to infuse from a few hours to several days and can be either hot or cold. If this infusion is carried out hot, temperatures which are too high should be avoided (i.e. greater than 60°C), in order to limit chemical oxidation and chemical degradation of the compounds to be extracted. The mixture can then be filtered and rinsed several times using the solvent employed. Distillation can then be carried out to obtain an extract. This distillation is preferably carried out at a temperature of 50 to 60°C. in order to avoid degradation of the polyphenol compounds, under a residual pressure of 12 to 20 Kpa to evaporate the mixture of solvents contained in the filtrate.

Alternatively, a cocoa extract as used in the present specification may be prepared by the above-indicated process, but starting from commercial cocoa beans that have undergone drying as a pre-treatment. The obtained dried kernels can then be subjected to a rehumidification stage after shelling for instance with 30 to 50% warm water, before the grinding stage in the solvent. Such rehumidification allows the cell walls of the kernels to regain their elasticity and to therefore not be ruptured during grinding in the presence of the solvent.

### 2. Method for preparing a cocoa-derived material

The present specification discloses a method for preparing a cocoa-derived material according to the invention.

The specification discloses a method for preparing cocoa-derived material which is in the form of a syrup. Such method comprises the steps of
a) Mixing a soluble cocoa powder with a cocoa extract as defined herein and comprising more than 25% by weight of polyphenols, and preferably more than 25, 30, 35, 40, 45, 50, 55, 60 or 65 % by weight of polyphenols, based on the extract,
b) Optionally admixing one or more additional ingredients, to the mixture of step a),
c) Solubilizing the mixture of step a) or b) in water,
d) Adjusting the pH of the suspension obtained in step c) to a pH value of less than 5, preferably less than 4 and most preferably less than 3.5,
e) Optionally homogenizing said mixture, preferably at a pressure of at least 100 bar, and preferably between 150 and 200 bar and at a temperature of at least 70°C, most preferably at 85°C.
f) Optionally pasteurizing the mixture of step d) or e) preferably at a temperature of at least 80°C for at least 20 seconds, and
g) Cooling the mixture of step d), e) of f) to a temperature of at least -20°C for at least 1 minute,
h) Optionally admixing one or more additional ingredients, to the mixture of step g),
i) Optionally carbonating the mixture.

The carbonation of the cocoa-derived material can be performed using any methods known in the art and for instance by adding H₂CO₃ to the cocoa-derived material.

The specification also discloses, a method for preparing cocoa-derived material which is in the form of a powder composition. Such method comprises the steps of:
a) Mixing a soluble cocoa powder with a cocoa extract comprising more than 25% 25% by weight of polyphenols, and preferably more than 25, 30, 35, 40, 45, 50, 55, 60 or 65 % by weight of polyphenols, based on the extract,
b) Optionally admixing one or more additional ingredients to the mixture of step a), and
c) drying said mixture.

The obtained product can be freeze-dried, roller-dried, spray-dried or vacuum dried which procedures are commonly known in the art.

According to the present specification, a cocoa-derived material may be obtained by dry mixing the ingredients as described in the present specification.

The above-defined methods are further characterised in that in step a) said soluble cocoa powder and said cocoa extract are mixed in a weight ratio which is comprised between 3:1 and 1:3 and preferably between 2:1 and 1:2, and which preferably is 1.

### 3. Beverages

According to the present specification, a beverage or drink may be comprise a cocoa-derived material according to the specification. The terms "drink" and "beverage" or "cocoa-derived beverage" or "cocoa-derived drink" are interchangeably used herein. Beverages according to the present invention may comprise hot or cold drinks. According to the present specification, the beverages may be selected from the group comprising but not limited to a water-based or milk-based drink; a carbonated drink; a reconstituted beverage, etc. and preferably a carbonated drink.

According to the present specification, a cocoa-derived material as defined herein, either in syrup or in powder form can be added to water or milk to produce a water-based or milk-based drink. Preferably a beverage according to the present specification is a water-based drink.

The specification describes a cocoa-derived beverage comprising between 0.01 and 30% by weight of a cocoa-derived material and for instance between 0.5 and 20% by weight or between 5 and 30% by weight or between 10 and 30% by weight of a cocoa-derived material, and between 70 and 99.99 % by weight of a liquid and for instance between 80 and 99.5% by weight or between 70 and 99.5 % by weight or between 70 and 90 % by weight of a liquid, preferably water, most preferably carbonated water, wherein said cocoa-derived material comprises a soluble cocoa powder and a cocoa extract, whereby said cocoa extract comprises more than 25% by weight and preferably more than 25, 30, 35, 40, 45, 50, 55, 60 or 65 % by weight of polyphenols, based on the extract. Preferably said cocoa-derived material is as defined above. The present cocoa-derived material may be provided in liquid or solid form as defined herein and mixed with a suitable amount of water.

The specification further discloses a beverage which is a carbonated drink comprising a syrup as defined herein and carbonated water. The specification further discloses a beverage which is a carbonated drink comprising a syrup as defined herein and a suitable amount of carbon dioxide (CO₂). a beverage which is a carbonated drink and which comprises a suitable amount of a soluble cocoa powder as defined herein, a suitable amount of a cocoa extract with elevated polyphenols content, preferably of at least 25wt% based on the extract, as defined herein, and a suitable amount of carbonated water or carbon dioxide (CO₂).

The carbonation of the cocoa-derived beverage can be performed using any methods known in the art and for instance by adding H₂CO₃ to a cocoa-derived material.

The specification further discloses a cocoa-derived pre concentrate comprising between 10 and 99 wt%, preferably between 10 and 30 wt%, most preferably 15 wt% of a cocoa-derived material as defined herein and between 1 and 90 wt%, preferably between 70 and 90 wt% and most preferably 85wt% of carbonated water. Preferably said beverage is a carbonated cocoa-derived beverage. Generally concentrations of soluble cocoa powder in the final carbonated beverage are comprised between 0.01% and 35 wt%, or between 0.05% and 10wt%, or between 0.1% and 5wt%. Generally concentrations of cocoa extract as defined herein in the final carbonated beverage are between 0.01% and 35 wt%, preferably between 0.05% and 10wt%, and more preferably between 0.1 % and 5 wt%.

The further specification discloses, a beverage further comprising one or more additional ingredients such as vitamins, flavouring agents and/or colouring agents.

Said additional ingredient may be caffeine, preferably provided in an amount of between 0.001 and 0.01 % by weight of said beverage, more preferably in an amount of between 0.001 and 0.007 % by weight of said beverage and for instance between 0.005 and 0.007 % by weight of said beverage.

According to the present specification, said additional ingredient may be a vitamin provided in an amount of less than 1 % by weight of said beverage, and for instance less than 0.8, 0.5, 0.3, 0.1 % by weight of said beverage.

According to the present specification, said additional ingredient may be a flavouring agent provided in an amount of less than 2 % by weight of said beverage, and for instance less than 1.5, 1, 0.75, 0.5 % by weight of said beverage.

According to the present specification, said additional ingredient may be a coloring agent provided in an amount of less than 2 % by weight of said beverage, and for instance less than 1.5, 1, 0.75, 0.5 % by weight of said beverage.

The present specification describes a beverage may have a polyphenol content of at least 50 mg/100ml, preferably between 75mg/100ml and 1g/100ml, and most preferably of between 80 and 120 mg/100ml, Preferably a beverage may have an amount of cocoa polyphenols of more than 0.01 wt%, or of at least 0.05 wt%, and preferably between 0.05 wt% and 1.5 wt% and more preferably between 0.08 wt% and 0.2 wt%.

The present specification describes a beverage may have a pH of less than 5, preferably less than 4, and most preferably having a pH of between 3.0 and

The present specification describes a beverage or drink may have an ORAC value of at least 1000 µmol TE per 100ml, preferably at least 2000 µmol TE per 100ml, more preferably of between 2500 and 3500 µmol TE per 100ml.

Some of the preferred cocoa-derived materials (syrup/powder compositions) and beverages are low calorie products, and thus sugar substitutes and sweeteners are preferred, especially in producing products with a per serving calorie count of less than or about 100 calories, or less than or about 70 calories, or less than or about 60 calories, or less than or about 50 calories, or less than or about 40 calories, or less than or about 30 calories, or substantially zero calories.

Preservatives and similar functional compounds and stabilizing agents, emulsifiers or beverage stabilizers, can also be used in the cocoa-derived materials and beverages as defined herein.

It will be understand that many other ranges or specific beverages can be selected and used. The beverages according to the present invention have an improved taste. Furthermore, a cocoa product contained in said beverages will not sediment.

A cocoa-derived beverage as defined above is preferably obtained or obtainable by a method comprising the steps of
a. Providing a cocoa-derived material as defined herein,
b. admixing water, preferably carbonated water, to said cocoa-derived material under aseptic conditions while optionally also adding other ingredients such as sugar and/or CO₂, and
c. Optionally filling the mixture of step b) in suitable recipients.

The following examples are meant to illustrate the invention. Examples 1 and 2 provide specific cocoa-derived syrups and beverages prepared there with according to the invention. Example 3 provides a specific cocoa-derived powder composition and beverages prepared there with according to the invention. Examples 4 and 5 provide an overview of components present in syrups, powder compositions and beverages according to the invention. Example 7 relates to a taste panel experiment. Example 8 illustrates characteristics of a beverage according to the invention. Example 9 illustrates an embodiment of a soluble cocoa powder and of a cocoa extract which may be used in the present cocoa-derived material.

### EXAMPLE

### Example 1: Syrup and beverage

Table 1 illustrates a syrup containing a soluble cocoa powder and a cocoa extract with elevated polyphenols level according to the present invention. The pH of this syrup is 3.3 by adding phosphoric acid.

A beverage, named cocoa cola, is produced using this syrup by mixing: 85wt% of carbonated water and 15wt% of said syrup. The beverage is prepared by the following process steps:
- Dry mixture of ingredients of the syrup solubilised in water and pH brought on 3.3
- Homogenization at 125 bar, pasteurization at 85°C during minutes via heat exchanger or in the tank itself, direct cooling to 20°C and aseptic filling in containers or in bag in box system.
- Aseptic connection of the containers on the carbonated water installation to make cocoa cola.

**Table 1**

| **components** | **Syrup (% by weight of the syrup)** | **Beverage (% by weight of the beverage)** |
|---|---|---|
| Defatted soluble cocoa powder | 1.33 | 0.2 |
| cocoa polyphenol extract | 1.33 | 0.2 |
| E150d (caramel) | 1 | 0.15 |
| Added caffeine | 0.04 | 0.006 |
| water | 29.63 | 89.444 |
| Added Sugar | 66.67 | 10 |

The obtained beverage (see **table 1**) is stable and has a good taste. The beverage obtained has high antioxidant effect. A darker more transparent color is obtained for the present beverage compared to a beverage without soluble cocoa powder or without cocoa extract.

It shall be noted that beverages based on soluble cocoa powder or cocoa extract have a worse taste. When the beverage is prepared without the cocoa extract the beverage does not have a cocoa taste and flavour agents should be added in a great amount to provide a beverage with a suitable cocoa taste. On the other hand, a beverage with the cocoa extract but without the soluble cocoa powder has a very bad taste that is not suited for a beverage. There is also no cocoa flavour in this beverage.

The combination of a cocoa extract and a soluble cocoa provides the beverage with a surprisingly good taste with a good cocoa flavour that is suitable for a beverage. The beverage has a polyphenol content of about 100mg/100ml. Furthermore, the ORAC value of the present beverage comprising a cocoa extract and a soluble cocoa is 2260 µmolTE/100ml. This value is higher than the ORAC values of beverages, that were prepared in accordance with the method described above but that do not contain a soluble cocoa powder or that do not contain a cocoa extract. The ORAC values for such beverages are 260 µmol TE/100ml and 2000 µmol TE/100ml, respectively.

### Example 2: Syrup and beverage

Table 2 illustrates a syrup containing a soluble cocoa powder and a cocoa extract with elevated polyphenols level according to the present invention.

A beverage is produced using this syrup by mixing: 85wt% of carbonated water and 15wt% of said syrup. The beverage is prepared using the method described in example 1. The obtained beverage (see **table 2**) is stable and has a good taste.

**Table 2**

| **components** | **Syrup (% by weight of the syrup)** | **Beverage (% by weight of the beverage)** |
|---|---|---|
| Defatted soluble cocoa powder | 1.33 | 0.2 |
| cocoa polyphenol extract | 1.33 | 0.2 |
| E150d (caramel) | 1 | 0.15 |
| water | 29.67 | 89.45 |
| Added Sugar | 66.67 | 10 |

### Example 3: Powder composition and beverage

The following example illustrates a powder composition containing a soluble cocoa powder and a cocoa extract with elevated polyphenol level according to the present invention. Components of the powder composition are illustrated in Table 3. A beverage is produced using this powder by mixing 89.45wt% of carbonated water and 10.55wt% of said powder composition.

**Table 3**

| **Components** | **powder composition (% by weight of the powder composition)** | **Beverage (% by weight of the beverage)** |
|---|---|---|
| soluble cocoa powder | 1.9 | 0.2 |
| cocoa polyphenol extract | 1.9 | 0.2 |
| E150d (caramel) | 1.4 | 0.15 |
| water | - | 89.45 |
| Added Sugar | 94.8 | 10 |

### Example 4: Syrup and beverage with sweetener

**Table 4** represents components of a syrup and of a beverage prepared with such syrup. 0.8 wt% of syrup was added to 99.2 wt% of carbonated water and resulted in a good tasting drink.

**Table 4**

| **Components** | **Syrup (% by weight of the syrup)** | **Beverage (% by weight of the beverage)** |
|---|---|---|
| Defatted soluble cocoa powder | 24.64 | 0.2 |
| cocoa polyphenol extract | 24.64 | 0.2 |
| E150d (caramel) | 18.5 | 0.15 |
| Added caffeine | 0.74 | 0.006 |
| Water | 29.48 | 89.444 |
| Added Sucralose | 2 | 10 |

### Example 5: Syrup and beverage

**Table 5** represents components of a syrup and of a beverage prepared with such syrup. 15 wt% of syrup was added to 85 wt% of carbonated water and resulted in a good tasting drink. The powder composition applied in this example corresponds to the powder composition as described in example 3.

**Table 5**

| **Components (total amounts)** | **Syrup (wt% by weight of the syrup) (based on example 1)** | **Beverage (wt% by weight of the beverage) (based on example 1)** |
|---|---|---|
| water | 29.63% | 89.444% |
| flavoring agent | - | - |
| coloring agent | 1% E150d | 0.15% E150d |
| vitamins | - | - |
| % sugar | 66.8 - 67.2% | 10-11% |
| % caffeine | 0.05-0.066% | 0.0075 - 0.01% |
| % polyphenols | 0.5 - 0.65% | 0.075 - 0.1 % |
| % fats | 0.04% | 0.006% |
| % theobromine | 0.16 - 0.19% | 0.026% |
| % xanthines | 0.165 - 0.2% | 0.03% |
| % pectin | 0.02 - 0.08% | 0.003 - 0.012% |
| % ash | 0.2 - 1 % | 0.03 - 0.15% |
| % fibers | 0.02 - 0,1 | 0.003 - 0.015% |
| % proteins | 0.22 - 0.3% | 0.03 - 0.045% |
| % catechin | 0.007 - 0.1% | 0.001 - 0.015% |
| % epicatechin | 0.07 - 0.2% | 0.01 - 0.03% |

### Example 6: Powder composition and beverage

**Table 6** represents the composition of a powder composition and of a beverage prepared with such powder composition. 10.56 wt% of the powder composition was added to 89.44 wt% of carbonated water resulting in a good tasting drink.

**Table 6**

| **Components (total amounts)** | **powder composition (% by weight of the powder composition)** | **Beverage (% by weight of the beverage)** |
|---|---|---|
| water | - | 89.44% |
| flavoring agent | - | - |
| coloring agent (E150d) | 1.4% | 0.15% |
| vitamins | - | - |
| % sugar | 95.2% | 10-11% |
| % caffeine | 0.085% | 0.0075 - 0.01% |
| % polyphenols | 0.78% | 0.075 - 0.1% |
| % fats | 0.057% | 0.006% |
| % theobromine | 0.26% | 0.026% |
| % xanthines | 0.28% | 0.03% |
| % pectin | 0.09% | 0.003 - 0.012% |
| % ash | 0.3 - 1.5% | 0.03 - 0.15% |
| % fibers | 0.1 % | 0.003 - 0.015% |
| % proteins | 0.3 - 0.45% | 0.03 - 0.045% |
| % catechin | 0.014 - 0.14% | 0.001 - 0.015% |
| % epicatechin | 0.1 - 0.3% | 0.01 - 0.03% |

### Example 7: Evaluation of the beverage taste

The taste and organoleptic properties of three beverages was evaluated by a trained taste panel.

Beverage A was prepared by mixing 15wt% of a syrup as defined herein comprising a soluble cocoa powder and a cocoa polyphenol extract with 85wt% carbonated water is accordance with the present invention.

Beverage B was prepared by mixing 85wt% carbonated water with 15wt% of a syrup comprising a soluble cocoa powder as defined herein but not containing a cocoa polyphenol extract as defined herein.

Beverage C was prepared by mixing 85wt% carbonated water with 15wt% of a syrup comprising a cocoa polyphenol extract as defined herein but not containing a soluble cocoa powder as defined herein.

The composition of the syrups used to prepare beverages A, B, and C is given in table 7. All ingredients (syrup + carbonated water) were mixed and cooked (at 100°C) during 1 minute. After this, the mixture was cooled during 10 minutes and kept in a fridge (12°C) during at least one week until use.

**Table 7**

| | **Syrup used for preparing Beverage A (in wt%)** | **Syrup used for preparing Beverage B (in wt%)** | **Syrup used for preparing Beverage C (in wt%)** |
|---|---|---|---|
| Defatted soluble cocoa powder | 1.33 | 1.33 | - |
| cocoa polyphenol extract | 1.33 | - | 1.33 |
| E150d (caramel) coloring agent | 1 | 1 | 1 |
| caffeine | 0.04 | 0.04 | 0.04 |
| water | 39.7 | 39.7 | 39.7 |
| Added Sugar | 56.6 | 57.93 | 57.93 |

In general, when performing taste panel experiments different scores can be given to different flavors and aromas such as roasted, sweet, bitter, acidity, alkaline, chocolate, roasted, aromatic, wine, liquorices, earthy, smoke, green, believed wood, crumb, caramel, fruity, floral, biscuit, baked, bready, popcorn, cereal, malty, astringent or praline. Also a score can be given for some quality issues such as the intensity, quality, fullness, sparkling perception, astringency of the beverages and the flavors and aromas of the beverages.

In the present example, a taste panel was asked to evaluate samples of the above three beverages by presenting their comments and remarks on the aroma and flavor character of the samples. The average scores ranged from score 1 corresponding to a very bad appreciation of the beverage to score 5 which corresponds to a very good appreciation of the beverage.

The taste panel, asked to evaluate the taste and organoleptic properties of the above three beverages unanimously give the following scores to respectively beverages A, B and C: scores of 5, 2, and 1. These results clearly indicate that a beverage (beverage A) in accordance with the present invention has a much better aroma and flavor compared to beverages that are prepared without cocoa soluble powder (beverage C) or without cocoa extract (beverage B).

### Example 8 : Evaluation of the beverages

In the following example, physical and taste properties of different kind of beverages were compared. The beverages were prepared by mixing 15wt% of a syrup as defined in **table 8** with 85wt% carbonated water in accordance with the present invention.

**Table 8**

| | **Beverage D (syrup composition in g)** | **Beverage E (syrup composition in g)** | **Beverage F (syrup composition in g)** |
|---|---|---|---|
| Defatted soluble cocoa powder (solubility of more than 70% in water at 20°C) | - | - | **2.66** |
| Standard cocoa powder (solubility lower than 70% in water at 20°C) | 2.66 | 2.66 | - |
| cocoa polyphenol extract as defined herein | - | 2.66 | **2.66** |
| E150d (caramel) coloring agent | 2 | 2 | **2** |
| water | 59.34 | 59.34 | **59.34** |
| Added Sugar | 136 | 133.34 | **133.34** |
| TOTAL amount syrup | 200g | 200g | **200g** |
| Solubility of the syrup in the carbonated water | - | - | **++** |
| Sedimentation after 1 week | Yes | yes | **no** |
| Taste | -- | - | **++** |

| | | | |
|---|---|---|---|
| '--' = very bad ; "-" bad '+' = good ; '++' = very good | | | |

When preparing the above beverages, it was observed that the syrup used to prepare the beverage F dissolved better and more rapidly in the added carbonated water compared to the syrups used to prepare beverages D and E.

It could also be observed that in beverages D and E sedimentation was observed after one week, while in beverage F no sedimentation could be observed even after storage of the drink for one week. Beverage F had a much better taste and mouth feel than drinks D and E.

In addition, beverage F had a much better taste, aroma and flavor compared to:
(I) a beverage that was prepared with the same ingredients as for beverage F but not containing a cocoa soluble powder. The amount of cocoa soluble powder was replaced by additional sugar; and
(II) a beverage that was prepared with the same ingredients as for beverage F but not containing a cocoa extract. The amount of cocoa extract was replaced by additional sugar.

Unexpectedly, even when more sugar was added to these comparative drinks (I and II), the taste of these drinks remained unsatisfactory compared to the taste of beverage F. The three drinks were tested by a taste panel and this panel indicated that the taste of beverage F was the best; this drink had a beautiful, full and rich taste. Whereas, even if the taste of drink I resembled the taste of beverage F, the taste of this drink was however very fade and not satisfactory. The taste of drink II did not reassemble the taste of beverage F and was not acceptable.

Use of a mixture of soluble cocoa powder and a cocoa extract as defined herein to prepare a beverage thus provides beneficial and unexpected effects over the separate use of these individual components: by using these components in combination a drink with an exceptional good taste was obtained that did not show sedimentation problems and had a good shelf life.

### Example 9 : Embodiments of a soluble cocoa powder and a cocoa extract suitable for use in the present invention

Table 9 illustrates an embodiment of the composition of a soluble cocoa powder that can be used in a cocoa-derived composition according to the invention. In this table the amount of fat is expressed in wt%. Amounts of other components are expressed in % by fat-free dry weight, i.e. by weight on a dry fat-free basis. This example of soluble cocoa powder has more than 90% solubility in water at 20°C.

**Table 9**

| **Ingredient** | **Amount** |
|---|---|
| fat | 0-12w% |
| amino acids, peptides, proteins | 28wt% |
| ash | 6 wt% |
| sugars | 2.5wt% |
| Glucose, glucose oligomers and dextrines | 37wt% |
| pentosanes | 3.5wt% |
| pectines | 0.5- 2wt% |
| polyphenols | 7-13wt% |
| organic acid | 3-4wt% |
| theobromine | 3wt% |
| caffeine | 0.4wt% |
| fosfatides | 0.8wt% |

Table 10 illustrates an embodiment of the composition of a cocoa extract that can be used in a cocoa-derived composition according to the invention.

**Table 10**

| **Ingredient** | **Amount (in wt%)** |
|---|---|
| Polyphenols | 60.5 |
| Protein | 9.5 |
| Carbohydrates | 12 |
| Theobromine | 7 |
| Caffeine | 1 |
| Moisture | 6.5 |
| Ashes | 3.5 |

## Claims

1. A cocoa-derived material comprising a soluble cocoa powder and a cocoa extract, whereby said cocoa extract comprises polyphenols in an amount of more than 25% by weight based on the extract, and whereby said soluble cocoa powder has a solubility in an aqueous solvent at a temperature of 20°C of at least 70%,
wherein the weight ratio of soluble cocoa powder to cocoa extract in said material is comprised between 3:1 and 1:3, and
wherein said cocoa-derived material is a syrup or is a powder, and
wherein said material, when provided as a syrup has an ORAC value of between 50 and 250 µmol TE/g syrup, and when provided as powder has an ORAC value of between 10 and 10000 µmol TE/g powder.

2. Cocoa-derived material according to claim 1, whereby said soluble cocoa powder has a solubility in an aqueous solvent at a temperature of 20°C of at least 90%.

3. Cocoa-derived material according to claim 1 or 2, wherein the weight ratio of soluble cocoa powder to cocoa extract in said material is comprised between 2:1 and 1:2, and preferably is 1.

4. Cocoa-derived material according to any of claims 1 to 3, further comprising one or more additional ingredients selected from the group comprising sugars, sweeteners, caffeine, vitamins, flavouring agents and colouring agents.

5. Cocoa-derived material according any of claims 1 to 4, wherein said cocoa extract is a solvent-derived extract and whereby said solvent is ethanol and water, acetone and water, 2-butanol and water or 2-propanol and water.

6. Cocoa-derived material according to any of claims 1 to 5, wherein said cocoa extract is obtained from non-defatted cocoa beans, preferably from non-fermented, non-defatted cocoa beans.

7. Cocoa-derived material according to any of claims 1 to 6, wherein said cocoa extract comprises more than 35wt% of polyphenols.

8. Cocoa-derived material according to any of claims 1 to 7, wherein said cocoa extract comprises between 5 and 15 % by weight of the extract of polyphenol monomers whereby said monomers comprise between 5 and 15% by weight of the extract of epicatechin and between 0.5 and 5 % by weight of the extract of catechin.

9. Cocoa-derived material according to any of claims 1 to 8, wherein said soluble cocoa powder comprises between 1 and 24wt% by fat-free dry weight of polyphenols.

10. Cocoa-derived material according to any of claims 1 to 9, wherein said soluble cocoa powder comprises an amount of glucose, glucose oligomers and/or dextrines comprised between 10 and 60% by fat-free dry weight.

11. Use of a cocoa-derived material is as defined in any of claims 1 to 10 for the preparation of a beverage.

12. Use according to claim 11 wherein said beverage is a carbonated drink which comprises a suitable amount of carbonated water and/or carbon gas.

13. Cocoa-derived beverage comprising
- between 10 and 30% by weight of a cocoa-derived material, wherein said cocoa-derived material is as defined in any of claims 1 to 10, and
- between 70 and 90 % by weight of a liquid, preferably water, most preferably carbonated water.

14. Cocoa-derived beverage according to claim 13 having an ORAC value of at least 1000 µmol TE/100 ml, preferably of at least 2000 µmol TE/100 ml, and most preferably having an ORAC value of between 2500 and 3500 µmol TE/100 ml.

15. Beverage according to any of claims 13 to 14, having a pH of less than 5, preferably less than 4, and most preferably having a pH of between 3.0 and 3.5.

16. Beverage according to any of claims 13 to 15, having an amount of polyphenols of at least 0.05 % by weight.

17. Beverage according to any of claims 13 to 16, comprising a suitable amount of carbonated water and/or carbon gas.

18. Method for preparing a cocoa-derived beverage according to any of claims 13 to 17 comprising the steps of
a) providing a cocoa-derived material according to any of claims 1 to 10,
b) admixing water to said cocoa-derived material under aseptic conditions, while optionally also adding other ingredients such as sugar and/or CO₂, and
c) optionally filling the mixture of step b) in suitable recipients.

## Patentansprüche

1. Aus Kakao stammendes Material, umfassend ein lösliches Kakaopulver und einen Kakaoextrakt, wobei der Kakaoextrakt Polyphenole in einer Menge von mehr als 25 % nach Gewicht auf der Grundlage des Extraktes aufweist und wobei das lösliche Kakaopulver in einem wässrigen Lösungsmittel bei einer Temperatur von 20 °C eine Löslichkeit von mindestens 70 % aufweist, wobei das Gewichtsverhältnis des löslichen Kakaopulvers zu Kakaoextrakt in dem Material zwischen 3:1 und 1:3 beträgt und wobei es sich bei dem aus Kakao stammenden Material um einen Sirup oder ein Pulver handelt und wobei das Material, wenn es als Sirup vorgesehen ist, einen ORAC-Wert zwischen 50 und 250 µmol TE/g Sirup aufweist, und wenn es als Pulver vorgesehen ist, einen ORAC-Wert zwischen 10 und 10.000 µmol TE/g Pulver aufweist.

2. Aus Kakao stammendes Material nach Anspruch 1, wobei das lösliche Kakaopulver in einem wässrigen Lösungsmittel bei einer Temperatur von 20 °C eine Löslichkeit von mindestens 90 % aufweist.

3. Aus Kakao stammendes Material nach Anspruch 1 oder 2, wobei das Gewichtsverhältnis des löslichen Kakaopulvers zu Kakaoextrakt in dem Material zwischen 2:1 und 1:2 beträgt und vorzugsweise 1 beträgt.

4. Aus Kakao stammendes Material nach einem der Ansprüche 1 bis 3, des Weiteren umfassend mindestens einen zusätzlichen Inhaltsstoff, der aus der Gruppe ausgewählt ist, die Zucker, Süßungsmittel, Koffein, Vitamine, Aromastoffe und Farbstoffe umfasst.

5. Aus Kakao stammendes Material nach einem der Ansprüche 1 bis 4, wobei der Kakaoextrakt ein mit einem Lösungsmittel erhaltener Extrakt ist und wobei das Lösungsmittel Ethanol und Wasser, Aceton und Wasser, 2-Butanol und Wasser oder 2-Propanol und Wasser ist.

6. Aus Kakao stammendes Material nach einem der Ansprüche 1 bis 5, wobei der Kakaoextrakt aus nicht-entfetteten Kakaobohnen, vorzugsweise aus nichtfermentierten, nicht-entfetteten Kakaobohnen, erhalten wird.

7. Aus Kakao stammendes Material nach einem der Ansprüche 1 bis 6, wobei der Kakaoextrakt mehr als 35 Gew.-% Polyphenole aufweist.

8. Aus Kakao stammendes Material nach einem der Ansprüche 1 bis 7, wobei der Kakaoextrakt zwischen 5 und 15 % Polyphenolmonomere nach Gewicht des Extraktes aufweist, wobei die Monomere zwischen 5 und 15 % Epicatechin nach Gewicht des Extraktes und zwischen 0,5 und 5 % Catechin nach Gewicht des Extraktes aufweisen.

9. Aus Kakao stammendes Material nach einem der Ansprüche 1 bis 8, wobei das lösliche Kakaopulver zwischen 1 und 24 Gew.-% Polyphenole nach fettfreiem Trockengewicht aufweist.

10. Aus Kakao stammendes Material nach einem der Ansprüche 1 bis 9, wobei das lösliche Kakaopulver eine Menge von Glukose, Glukoseoligomeren und/oder Dextrinen aufweist, die zwischen 10 und 60 % nach fettfreiem Trockengewicht aufweist.

11. Verwendung eines aus Kakao stammenden Materials, wie in einem der Ansprüche 1 bis 10 definiert, für die Zubereitung eines Getränks.

12. Verwendung nach Anspruch 11, wobei es sich bei dem Getränk um ein kohlensäurehaltiges Getränk handelt, das eine geeignete Menge an kohlensäurehaltigem Wasser und/oder Kohlensäuregas aufweist.

13. Aus Kakao stammendes Getränk, umfassend
- zwischen 10 und 30 % eines von Kakao stammenden Materials nach Gewicht, wobei das aus Kakao stammende Material wie in einem der Ansprüche 1 bis 10 definiert ist, und
- zwischen 70 und 90 % einer Flüssigkeit, vorzugsweise Wasser, am meisten bevorzugt kohlensäurehaltiges Wasser, nach Gewicht.

14. Aus Kakao stammendes Getränk nach Anspruch 13, das einen ORAC-Wert von mindestens 1000 µmol TE/100 ml, vorzugsweise mindestens 2000 µmol TE/100 ml und am meisten bevorzugt einen ORAC-Wert zwischen 2500 und 3500 µmol TE/100 ml aufweist.

15. Getränk nach einem der Ansprüche 13 bis 14, das einen pH-Wert unter 5, vorzugsweise unter 4 und am meisten bevorzugt einen pH-Wert zwischen 3,0 und 3,5 aufweist.

16. Getränk nach einem der Ansprüche 13 bis 15, das eine Polyphenolmenge von mindestens 0,05 % nach Gewicht aufweist.

17. Getränk nach einem der Ansprüche 13 bis 16, das eine geeignete Menge an kohlensäurehaltigem Wasser und/oder Kohlensäuregas aufweist.

18. Verfahren zum Zubereiten eines aus Kakao stammenden Getränks nach einem der Ansprüche 13 bis 17, welches folgende Schritte aufweist:
a) Vorsehen eines aus Kakao stammenden Materials nach einem der Ansprüche 1 bis 10,
b) Beimischen von Wasser zu dem aus Kakao stammenden Material unter aseptischen Bedingungen, während wahlweise außerdem weitere Inhaltsstoffe wie Zucker und/oder CO₂ zugegeben werden, und
c) wahlweises Füllen des Gemisches von Schritt b) in geeignete Aufnahmevorrichtungen.

## Revendications

1. Produit dérivé du cacao comprenant une poudre de cacao soluble et un extrait de cacao, ledit extrait de cacao comprenant des polyphénols en une quantité supérieure à 25 % en poids sur la base de l'extrait, et ladite poudre de cacao soluble ayant une solubilité dans un solvant aqueux à une température de 20°C d'au moins 70 %, dans lequel le rapport en poids de la poudre de cacao soluble sur l'extrait de cacao dans ledit produit est compris entre 3/1 et 1/3, et dans lequel ledit produit dérivé du cacao est un sirop ou une poudre, et dans lequel ledit produit, lorsqu'il est fourni sous la forme d'un sirop, a une valeur ORAC comprise entre 50 et 250 µmol TE/g de sirop, et lorsqu'il est fourni sous la forme d'une poudre, a une valeur ORAC comprise entre 10 et 10 000 µmol TE/g de poudre.

2. Produit dérivé du cacao selon la revendication 1, dans lequel ladite poudre de cacao soluble a une solubilité dans un solvant aqueux à une température de 20°C d'au moins 90 %.

3. Produit dérivé du cacao selon la revendication 1 ou 2, dans lequel le rapport en poids de la poudre de cacao soluble sur l'extrait de cacao dans ledit produit est compris entre 2/1 et 1/2, et est de préférence de 1.

4. Produit dérivé du cacao selon l'une quelconque des revendications 1 à 3, comprenant en outre un ou plusieurs ingrédients supplémentaires choisis dans le groupe comprenant les sucres, les édulcorants, la caféine, les vitamines, les agents aromatisants et les agents colorants.

5. Produit dérivé du cacao selon l'une quelconque des revendications 1 à 4, dans lequel l'extrait de cacao est un extrait obtenu avec un solvant et dans lequel ledit solvant est l'éthanol et l'eau, l'acétone et l'eau, le 2-butanol et l'eau ou le 2-propanol et l'eau.

6. Produit dérivé du cacao selon l'une quelconque des revendications 1 à 5, dans lequel ledit extrait de cacao est obtenu à partir de fèves de cacao non dégraissées, de préférence de fèves de cacao non dégraissées, non fermentées.

7. Produit dérivé du cacao selon l'une quelconque des revendications 1 à 6, dans lequel ledit extrait de cacao ne comprend pas plus de 35 % en poids de polyphénols.

8. Produit dérivé du cacao selon l'une quelconque des revendications 1 à 7, dans lequel ledit extrait de cacao comprend de 5 à 15 % en poids de l'extrait de monomères de polyphénols, lesdits monomères comprenant de 5 à 15 % en poids de l'extrait d'épicatéchine et de 0,5 à 5 % en poids de l'extrait de catéchine.

9. Produit dérivé du cacao selon l'une quelconque des revendications 1 à 8, dans lequel ladite poudre de cacao soluble comprend de 1 à 24 % en poids sec sans graisse de polyphénols.

10. Produit dérivé du cacao selon l'une quelconque des revendications 1 à 9, dans lequel ladite poudre de cacao soluble comprend une quantité de glucose, d'oligomères de glucose et/ou de dextrines comprise entre 10 et 60 % en poids sec sans graisse.

11. Utilisation d'un produit dérivé du cacao selon l'une quelconque des revendications 1 à 10, pour la préparation d'une boisson.

12. Utilisation selon la revendication 11, dans laquelle ladite boisson est une boisson gazeuse qui comprend une quantité adaptée d'eau gazeuse et/ou de gaz carbonique.

13. Boisson dérivée du cacao, qui comprend :
- de 10 à 30% en poids d'un produit dérivé du cacao, dans lequel ledit produit dérivé du cacao est tel que défini dans l'une quelconque des revendications 1 à 10, et
- de 70 à 90 % en poids d'un liquide, de préférence de l'eau, idéalement de l'eau gazeuse.

14. Boisson dérivée du cacao selon la revendication 13, ayant une valeur ORAC d'au moins 1 000 µmol TE/100 ml, de préférence d'au moins 2 000 µmol TE/100 ml, et ayant idéalement une valeur ORAC comprise entre 2 500 et 3 500 µmol TE/100 ml.

15. Boisson selon l'une quelconque des revendications 13 à 14, ayant une valeur de pH inférieure à 5, de préférence inférieure à 4, et ayant idéalement un pH compris entre 3,0 et 3,5.

16. Boisson selon l'une quelconque des revendications 13 à 15, ayant une quantité de polyphénol d'au moins 0,05 % en poids.

17. Boisson selon l'une quelconque des revendications 13 à 16, comprenant une quantité adaptée d'eau gazeuse et/ou de gaz carbonique.

18. Procédé de préparation d'une boisson dérivée du cacao selon l'une quelconque des revendications 13 à 17 qui comprend les étapes consistant à :
a) fournir un produit dérivé du cacao selon l'une quelconque des revendications 1 à 10,
b) mélanger l'eau au dit produit dérivé du cacao dans des conditions aseptiques, tout en ajoutant également, de manière facultative, d'autres ingrédients tels que le sucre et/ou le CO₂, et
c) remplir facultativement le mélange de l'étape b) dans des récipients adaptés.
